# EUROPEAN PATENT SPECIFICATION

(11) **EP 0 399 591 B1**
(45) Date of publication and mention of the grant of the patent: **30.03.1994**
(21) Application number: 90201211.1
(22) Date of filing: 14.05.1990
(51) Int. Cl.: B29C 51/22, B29C 59/06

(54) **Process for the provision of a mark or design in a plastic film, and stencil suitable for that purpose**
Verfahren zur Herstellung einer Kennzeichnung oder eines Musters auf einer Kunststoff-Folie
Procédé pour la réalisation d'une marque ou d'un dessin sur un film en plastique et stencil pour ce but

(30) Priority: 23.05.1989 NL 8901287
(43) Date of publication of application: 28.11.1990
(73) Proprietor: TREDEGAR FILM PRODUCTS B.V., NL-6466 NA Kerkrade (NL)
(72) Inventor: Boogers, Michael Petrus Johannes, NL-5611 KJ Eindhoven (NL); Meijer, Willem Hubert, NL-6471 HG Eygelshoven (NL)
(74) Representative: van der Kloet-Dorleijn, Geertruida W.F., Drs.

(56) References cited:
- EP-A- 0 059 506
- GB-A- 2 150 697
- US-A- 4 609 518

## Description

The invention relates to a stencil which is suitable for the provision of a mark or design in a plastic film, said stencil comprising raised parts and at least partially being provided with perforations.

Such a stencil is known from US-A-4.609.518, and is made by utilizing the laminar construction techniques, if desired followed by laser drilling techniques. Due to these rather sophisticated techniques, this known stencil must be expensive. Moreover, such a stencil cannot be adapted very easily for the provision of a different mark or design.

A stencil with a coating having a desired pattern which can be produced easier, faster and more reproducible than a pattern in a stencil according to US-A-4.609.518, has now been found.

The stencil according to the invention is characterized in that said stencil is completely perforated and comprises raised parts consisting of a coating covering perforated parts of said stencil.

The mesh number of the stencil used, which constitutes a measure for the pitch and diameter of the perforations, can of course be selected freely. However, if the mesh number is high, for example greater than 125 mesh, the perforations have become so small that the film is no longer perforated; while a low mesh number leads to perforations in the film which are of such large diameter that the pattern obtained becomes coarse and therefore aesthetically unattractive, although this constitutes no problem at all for certain applications.

Although the thickness of the coating can generally be varied between 0 and 100 µ, a thickness of approximately 15 µ has been found to be particularly suitable for the present purpose.

The coating is expediently a through-polymerizable resist system, in particular a photoresist. Such a coating layer has the advantage that a certain pattern can be applied easily to the stencil, using known techniques, such as, for example, by etching or photographic techniques, or by using high-energy (laser) radiation.

The invention also relates to a process for the provision of a mark or design in a plastic film, in which the film is at least partially deformed under the influence of heat and pressure by providing recesses which may or may not be perforated, using a stencil comprising raised parts and at least partially being provided with perforations and the mark or design is formed in the plastic film by deforming the film material at least along the periphery of the mark or design, in such a way that the mark or design, unlike the deformed part of the film, is not perforated, said process being characterized in that a relief pattern is provided by using a stencil which has completely been perforated and comprises raised parts consisting of a coating covering perforated parts of said stencil. The coating is preferably a through-polymerizable resist system, such as a photoresist.

The film is expediently a thermoplastic film, in particular a polyalkene film, preferably a polyethylene or polypropylene film. Although such polyalkenes are preferable on account of their plastic deformability, the invention is not restricted to these materials. Other plastics can, of course, also be used. It is pointed out that the term thermoplastic is understood to mean any plastic which can be softened or plasticized under heating, but plastics which are plastic at low temperature (for example, room temperature) and can be hardened, can also be used.

The film preferably has a thickness of at most 250 µ, more particularly approximately 10 µ to 150 µ. Such a thickness of the film makes it possible to deform said film in such a way that a mark or design or design can be discerned particularly clearly in the film in relief relative to the deformed part.

According to a preferred embodiment, the film is also provided with a supporting layer. The selection of the supporting layer to be used will depend on the envisaged use, and it can be connected to the plastic film locally if desired.

The deformed surface of the plastic film is preferably provided with a microstructure. The specific microstructure can be selected depending on the envisaged use and the film material concerned. The film, apart from the design or mark, can thus be given a modified surface structure which, due to the fact that the mark or design retains a smooth and shiny surface, means that the pictorial information becomes more clearly discernible in the film.

The film is preferably deformed by vacuum deep-drawing. This deep-drawing expediently takes place under the influence of heat. More particularly, such deformation is produced by guiding the film material, directly after the formation of the film at elevated temperature, and therefore in the phase in which optimum deformability of the film is possible, over a perforated stencil which is connected to a vacuum source. The deformations thus formed will then consist of recesses which may or may not be perforated, depending on the partial vacuum applied. Of couse, it is also possible to make the deformations by exerting pressure on the film when it is being guided over the stencil.

The deformations are preferably made under the application of heat which is fed in by means of a hot gas, in particular hot air.

Through a suitable choice of the cross-section of the deformations present, it is also possible for a certain matting to occur at the site of the deformations.

The stencil used in the process of the invention is perforated at least corresponding to the periphery of the pattern to be applied to the film. Through the application of a partial vacuum in the stencil or through pressing the film against the stencil, it thus becomes possible to place the desired pictorial information in relief in the plastic film. Of course, the temperature of the film must be sufficiently high here to permit such deformation, and it is therefore selected depending on the plastic used.

The invention is explained in greater detail below with reference to the appended drawing, in which:
Fig. 1 shows a cross-section through a part of a preferred embodiment of a cylindrical stencil during the formation of a plastic film according to the invention; and
Figs. 2 - 6 show various embodiments of the deformed part of a plastic film according to the invention.

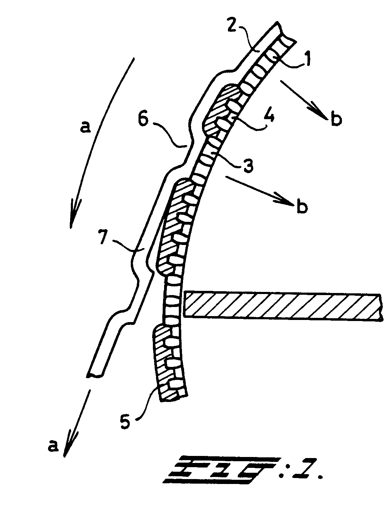

In Fig. 1 the arrows a indicate the direction of movement of the plastic film 2 which is conveyed over the surface of a cylindrical stencil 1 for the provision of a mark or design. The arrows b indicate the direction in which pressure is exerted on the film material. This pressure can be a partial vacuum set in the cylindrical stencil, or a partial overpressure exerted on the surface of the film which is not in contact with the stencil. During the deformation of the plastic film, the latter is at a sufficiently high temperature to permit permanent deformation of the film material, using slight pressure, within the residence time set by the process. For the provision of a mark or design, the stencil is provided with perforations such as 3 and also locally provided with a coating 5. The coating 5 preferably comprises a through-polymerizable resist system, for example a photoresist. The use of such a system makes it possible to apply the desired mark or design to the stencil in relief with great accuracy by known techniques.

The pattern corresponding to the mark or design to be applied is therefore provided on the surface of the stencil. The stencil used is preferably perforated over the entire surface. The perforations 4 are covered by the coating, but the perforations such as 3 are not. The recesses 6 will be formed at the uncovered perforations under the influence of heat and pressure, in order to obtain the desired mark or design.

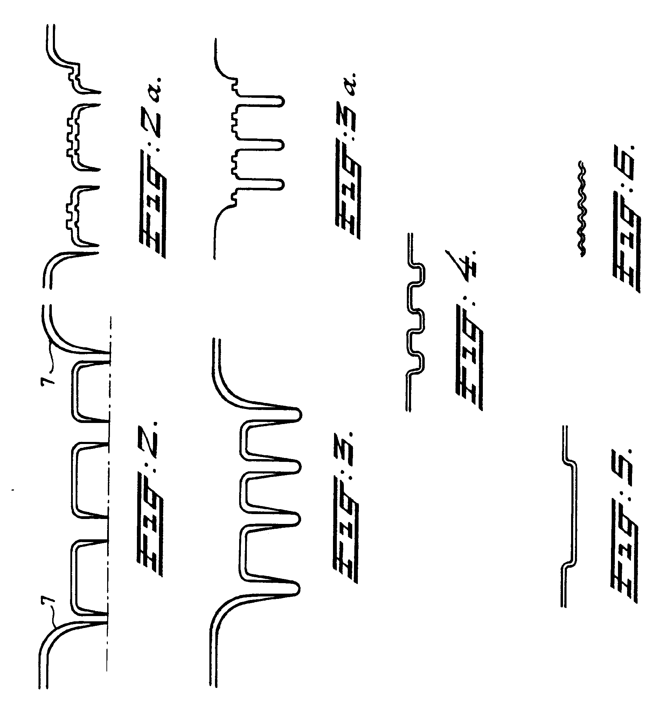

The film material used can be any plastic which is deformable under the influence of heat and/or pressure. A polyalkene, more particularly a polyethylene or polypropylene, is preferably used for the film material. Of course, the invention is not restricted to these materials. A number of embodiments of the deformations to be applied are shown in cross-section in Figs. 2 - 6. More particularly, the deformations are in the form of recesses, as shown perforated in Fig. 2, unlike Fig. 3 in which the recesses are not perforated. Figs. 2a and 3a show deformations corresponding to those of Figs. 2 and 3, but the surface of the film is provided with a microstructure. Figs. 4, 5 and 6 show a number of other variants of the deformations to be made in the film. The raised parts are shown by 7. The height of these parts 7 is, of course, determined by the thickness of the resist layer present on the stencil. The thickness of the resist layer lies expediently between 0 and 100 µ, but it is preferably approximately 15 µ. The invention is, of course, not restricted to the variants shown, while combinations of these variants are also possible.

## Claims

1. A stencil (1), in particular suitable for the provision of a mark or design in a relief pattern in a plastic film (2), said stencil comprising raised parts (5) and at least partially being provided with perforations (3, 4), **characterized in that** said stencil (1) is completely perforated and comprises raised parts (5) consisting of a coating covering perforated parts (3, 4) of said stencil (1).

2. A stencil according to claim 1, **characterized in** **that** the coating is a through-polymerizable resist system, in particular a photoresist.

3. A process for the provision of a mark or design in a plastic film (2) in the form of a relief pattern, in which the film is at least partially deformed under the influence of heat and pressure by providing recesses which may or may not be perforated, using a stencil (1) comprising raised parts (5) and at least partially being provided with perforations (3, 4) and the mark or design is formed in the plastic film (2) by deforming the film material at least along the periphery of the mark or design, in such a way that the mark or design, unlike the deformed part of the film, is not perforated, **characterized in that** a relief pattern is provided by using a stencil (1) which has completely been perforated and comprises raised parts (5) consisting of a coating covering perforated parts (3, 4) of said stencil (1).

4. A process according to claim 3, **characterized in** **that,** the film (2) is a thermoplastic film.

5. A process according to claim 4, **characterized in** **that,** the film (2) is a polyethylene or polypropylene film.

6. A process according to one or more of the claims 3 to 5, **characterized in that,** the film (2) has a thickness of at most 250 µ.

7. A process according to claim 6, **characterized in** **that,** the film (2) has a thickness of approximately 10 µ to 150 µ.

8. A process according to one or more of the claims 3 to 7, **characterized in that,** the film (2) is provided with a supporting layer.

## Patentansprüche

1. Schablone (1), insbesondere geeignet für die Herstellung einer Kennzeichnung oder eines Musters als Reliefmuster in einer Kunststoffolie (2), wobei die Schablone erhabene Teile (5) umfaßt und zumindest teilweise mit Perforationen (3, 4) versehen ist, dadurch gekennzeichnet, daß die Schablone (1) vollständig perforiert ist und erhabene Teile (5) umfaßt, die aus einer Abdeckung bestehen, welche perforierte Teile (3, 4) der Schablone (1) überdeckt.

2. Schablone nach Anspruch 1, dadurch gekennzeichnet, daß die Abdeckung ein durchpolymerisierbares Schutzsystem, insbesondere ein Fotolack, ist.

3. Verfahren zur Herstellung einer Kennzeichnung oder eines Musters auf einer Kunststoffolie (2) in Form eines Reliefmusters, bei welchem die Folie zumindest teilweise unter dem Einfluß von Wärme und Druck verformt wird, indem Vertiefungen geschaffen werden, welche perforiert sein können oder nicht, bei dem eine Schablone (1) verwendet wird, die erhabene Teile (5) umfaßt und zumindest teilweise mit Perforationen (3, 4) versehen ist, und bei dem die Kennzeichnung oder das Muster in die Kunststoffolie (2) durch Verformen des Folienmaterials zumindest entlang dem Umriß der Kennzeichnung oder des Musters in der Weise eingeformt wird, daß die Kennzeichnung oder das Muster, anders als der verformte Teil der Folie, nicht perforiert ist, dadurch gekennzeichnet, daß ein Reliefmuster unter Verwendung einer Schablone (1) geschaffen wird, welche vollständig perforiert worden ist und erhabene Teile (5) umfaßt, die aus einer Abdeckung bestehen, die die perforierten Teile (3, 4) der Schablone (1) überdeckt.

4. Verfahren nach Anspruch 3, dadurch gekennzeichnet, daß die Folie (2) eine thermoplastische Folie ist.

5. Verfahren nach Anspruch 4, dadurch gekennzeichnet, daß die Folie (2) eine Polyäthylen- oder Polypropylenfolie ist.

6. Verfahren nach einem oder mehreren der Ansprüche 3 bis 5, dadurch gekennzeichnet, daß die Folie (2) eine Dicke von höchstens 250 µ aufweist.

7. Verfahren nach Anspruch 6, dadurch gekennzeichnet, daß die Folie (2) eine Dicke von etwa 10 µ bis 150 µ aufweist.

8. Verfahren nach einem oder mehreren der Ansprüche 3 bis 7, dadurch gekennzeichnet, daß die Folie (2) mit einer Stützschicht versehen ist.

## Revendications

1. Stencil (1), qui convient en particulier pour le report d'une marque ou d'un dessin en relief dans un film plastique (2), ledit stencil comprenant des parties en relief (5) et qui sont, du moins partiellement, prévues avec des perforations (3,4), caractérisé en ce que ledit stencil (1) est complètement perforé et comprend des parties en relief (5) constituées d'un revêtement recouvrant les parties perforées (3,4) dudit stencil (1).

2. Stencil selon la revendication 1, caractérisé en ce que le revêtement est un système de résine directement polymérisable , en particulier une résine photosensible.

3. Procédé de report d'une marque ou d'un dessin dans un film plastique (2) sous la forme d'un modèle en relief, dans lequel le film est au moins partiellement déformé sous l'influence de la chaleur et de la pression, en prévoyant des évidements qui peuvent être ou ne pas être perforés, utilisant un stencil (1) comprenant des parties en relief (5) et en étant au moins partiellement pourvu de perforations (3,4) la marque ou le dessin étant formé(e) dans le film plastique (2) en déformant le matériau du film au moins le long de la périphérie de la marque ou du dessin d'une manière telle que la marque ou le dessin, à la différence de la partie déformée du film, ne soit pas perforé (e), caractérisé en ce qu' un modèle en relief est réalisé en utilisant un stencil (1) qui a été complètement perforé et qui comprend des parties en relief (5) constituées d'un revêtement recouvrant les parties perforées (3,4) dudit stencil (1).

4. Procédé selon la revendication 3, caractérisé en ce que le film (2) est un film thermoplastique.

5. Procédé selon la revendication 4, caractérisé en ce que le film (2) est un film de polyéthylène ou de polypropylène.

6. Procédé selon l'une ou plus des revendications 3 à 5, caractérisé en ce que le film (2) a une épaisseur maximale de 250 µ**.**

7. Procédé selon la revendication 6, caractérisé en ce que le film (2) a une épaisseur d'approximativement 10 µ à 150 µ**.**

8. Procédé selon l'une ou plus des revendications 3 à 7, caractérisé en ce que le film (2) est prévu avec une couche de support.
